# EUROPÄISCHE PATENTSCHRIFT

(11) **EP 2 406 115 B1**
(45) Veröffentlichungstag und Bekanntmachung des Hinweises auf die Patenterteilung: **02.10.2013**
(21) Anmeldenummer: 10706635.9
(22) Anmeldetag: 03.03.2010
(51) Int. Cl.: B61D 17/04, B64D 11/00

(54) **DECKENPANEL MIT VORHANGSCHIENE IN EINER TRANSPORTMITTELKABINE, VERFAHREN UND VERWENDUNG**
CEILING PANEL HAVING CURTAIN RAIL IN A TRANSPORT MEANS CABIN, METHOD AND USE
PANNEAU DE PLAFOND AVEC RAIL A RIDEAU POUR HABITACLE DE MOYEN DE TRANSPORT PROCEDE ET USAGE

(30) Priorität: 12.03.2009 DE 102009012754; 12.03.2009 US 159646 P
(43) Veröffentlichungstag der Anmeldung: 18.01.2012
(73) Patentinhaber: Airbus Operations GmbH, 21129 Hamburg (DE); Airbus Americas Engineering, Inc., Mobile AL 36615 (US)
(72) Erfinder: NEUMANN, Andreas, 24558 Wakendorf (DE); ZUBEL-KESOGLOU, Anja, 22761 Hamburg (DE); WALKER, Adam, Daphne Alabama 36526 (US)
(74) Vertreter: Maiwald Patentanwalts GmbH
(86) Internationale Anmeldenummer: PCT/EP2010/052678
(87) Internationale Veröffentlichungsnummer: WO 2010/102932

(56) Entgegenhaltungen:
- EP-A1- 0 547 362
- EP-A1- 0 754 621
- DE-C1- 4 119 623
- US-A- 2 310 573
- US-A- 2 605 064
- US-A- 2 710 731
- US-B1- 6 189 831
- US-B1- 6 523 779

## Beschreibung

### GEBIET DER ERFINDUNG

Die Erfindung betrifft die Unterteilung von Bereichen in einem Transportmittel. Insbesondere betrifft die Erfindung ein Deckenpanel mit einer Vorrichtung zum Anbringen eines Vorhangs in einer Kabine eines Transportmittels. Ferner betrifft die Erfindung ein Luftfahrzeug mit einem Gang und einem Deckenpanel sowie ein Verfahren zum Anbringen eines Vorhangs in einer Kabine eines Transportmittels und die Verwendung eines Deckenpanels in einem Luftfahrzeug.

### HINTERGRUND DER ERFINDUNG

Vorhangschienen werden in Flugzeugkabinen benutzt, um Klassen voneinander zu trennen oder Arbeitsbereiche in Bordküchen von den Passagieren zu trennen. Dabei ist die Vorhangschiene eine einfache Schiene, in der ein Vorhang läuft.

Aus der EP 0 547 362 A1 ist eine Vorrichtung zur Unterteilung einer Flugzeugkabine mit einem zur Halterung eines Vorhangs vorgesehenen Träger bekannt.

Die DE 41 19 623 C1 zeigt eine Vorrichtung zur Unterteilung einer Flugzeugkabine zwischen zwei Gruppen von Sitzplätzen mit mindestens einem Trennelement, das einen Vorhang aufweist.

US 2,310,573 beschreibt eine Flugzeugkabine mit Klappbetten, welche in die Kabinendecke versenkt werden können.

US 6,523,779 B1, welches als nächstliegender, bekannter Stand der Technik betrachtet wird, beschreibt eine verschiebbare Trennvorrichtung für eine Flugzeugkabine, welche über die gesamte Kabinenbreite verläuft und zwei Rollvorrichtungen aufweist, welche in Schienen laufen, die unter dem zentralen Überkopf-Gepäckfach angebracht sind.

### ZUSAMMENFASSUNG DER ERFINDUNG

Es kann als Aufgabe der Erfindung angesehen werden, eine einfache und flexible Vorrichtung zur Unterteilung von Bereichen in einem Transportmittel anzugeben.

Es ist ein Deckenpanel mit einer Vorrichtung zum Anbringen eines Vorhangs in einer Kabine eines Transportmittels, ein Luftfahrzeug mit einem Gang und einem Deckenpanel, ein Verfahren zum Anbringen eines Vorhangs in einer Kabine eines Transportmittels und die Verwendung eines Deckenpanels in einem Luftfahrzeug gemäß den Merkmalen der unabhängigen Ansprüche angegeben. Weiterbildungen der Erfindung werden durch die abhängigen Ansprüche verkörpert.

Gemäß einem Ausführungsbeispiel der Erfindung ist ein Deckenpanel mit einer Vorrichtung zum Anbringen eines Vorhangs in einer Kabine eines Transportmittels mit einer Befestigungseinheit, einer Halterungseinheit und einer Vorhanganbringungseinheit angegeben. Das Deckenpanel ist zum Halten bzw. Befestigen der Befestigungseinheit ausgeführt. Hierfür kann die Befestigungseinheit zum Beispiel zumindest teilweise in dem Deckenpanel integriert werden. Die Befestigungseinheit ist zum Anbringen der Halterungseinheit an das Deckenpanel ausgeführt. Die Befestigungseinheit kann als Halterungsanbringungseinheit zum verschiebbaren Anbringen der Halterungseinheit oder zwei oder mehrerer Halterungseinheiten ausgeführt sein. Die Halterungseinheit ist zum Halten bzw. Anbringen der Vorhanganbringungseinheit ausgeführt und die Vorhanganbringungseinheit ist zum Halten eines Vorhangs ausgeführt. Die Vorhanganbringungseinheit kann als Vorhangschiene, Vorhangstange, etc. ausgeführt sein.

Ein derartiges Deckenpanel ermöglicht es, dass beispielsweise in einer Flugzeugkabine Klassen voneinander getrennt werden können. Ferner können Arbeitsbereiche in Bordküchen von den Passagieren trennbar ausgeführt sein.

Ein derartiges Deckenpanel ermöglicht es, dass der Bereich vom Boden eines Gangs einer Flugzeugkabine bis zu einem Bereich über der Befestigungseinheit bis zum Deckenpanel abgetrennt werden kann, um einen Sicht- und evtl. auch einen Lichtschutz zu gewährleisten.

Ein derartiges Deckenpanel ist beispielsweise oberhalb eines mittleren Überkopf-Staufachs einer Kabine angeordnet und/oder oberhalb eines seitlichen Überkopf-Staufachs (Hatrack) angeordnet.

Das Deckenpanel kann oberhalb eines Monuments in einem Luftfahrzeug angebracht sein.

Das Deckenpanel weist den Vorteil auf, dass viele verschiedene Anbindungspositionen der Vorhanganbringungseinheit in dem Transportmittel möglich sind und mehrere verschiedene bisherige Anbindungsvarianten ersetzen kann.

So kann das Deckenpanel als Standardlösung zum Anbringen eines Vorhangs in einer Kabine eines Transportmittels bereitgestellt werden. Damit kann beispielsweise für jeden Kunden eine standardisierte Lösung zum Anbringen eines Vorhangs in einer Kabine mit einem verminderten Kosten- und Zeitaufwand bei der Installation bereitgestellt werden. Mit einem derartigen Deckenpanel kann eine Anbindung an Überkopf-Staufächer (Hatrack), eine Trennwand, ein Monument bzw. deren Kombination vermieden werden.

Bei einem derartigen Deckenpanel sind unterschiedliche Konturen einer Befestigungseinheit in das Deckenpanel integrierbar. Dabei können die Befestigungseinheiten in verschiedenen Richtungen des Deckenpanels laufen, beispielsweise auch als verschwenkte Schienenführungen.

Bei einem derartigen Deckenpanel kann der Abstimmungsaufwand des Vorhangsystems mit umliegenden Bauteilen und Systemen mit denen das Vorhangsystem üblicherweise Schnittstellen hat, wie z. B. eine Decke, ein seitliches oder mittleres Überkopf-Staufach (Hatrack, mittig, seitlich), Lichteinheiten (Ballast Units), Substrukturen, Klimaeinrichtungen sowie Elektrikeinrichtungen (viele Schnittstellen), verringert werden. Beim mehrmaligen Installieren des Deckenpanels fällt der oben genannte Abstimmungsaufwand nur einmal an, da eine Standardisierung des Deckenpanels erfolgen kann, so dass jedes Deckenpanel (mit oder ohne Befestigungseinheit) einfach in ein Transportmittel eingebaut werden kann. Dadurch sind beispielsweise nach der Abstimmung keine kompletten Neukonstruktionen der Anbindungen bzw. des Deckenpanels erforderlich.

Das Deckenpanel ermöglicht es, dass die Befestigungseinheit wenig exponiert, angepasst an den Bauraum, beispielsweise einer Flugzeugkabine, ausgeführt ist, eine Lichtdichtigkeit zur Decke erzielt werden kann, sowie dass breite Dichtungen zur Lichtabdeckung und viele Dichtungsvarianten nicht mehr erforderlich sind.

Ein derartiges Deckenpanel ist beispielsweise in einem anderen Transportmittel wiederverwendbar.

Ein derartiges Deckenpanel zum Anbringen eines Vorhangs ist rekonfigurierbar. Rekonfigurierbar bedeutet, dass ein Deckenpanel mit Vorhangaufnahmemöglichkeit bei Bedarf gegen ein Deckenpanel ohne diese Aufnahme mit wenig Aufwand ausgetauscht werden kann. Das ist eventuell erforderlich, wenn das Kabinenlayout rekonfiguriert wird, z.B. die Business Class wird erweitert und die Economy Class wird verkleinert und umgekehrt. Wenn diese Layoutveränderung sehr klein ist, kann das Deckenpanel an seiner Position bleiben und die Verschiebung der Klassen (Rekonfiguration) erfolgt innerhalb des Panels durch Verschieben der Vorhangschiene.

Weiterhin ermöglicht dieses Deckenpanel eine schnelle und zeitsparende Installation einer Befestigungseinheit in eine Kabine eines Transportmittels sowie einen schnellen Austausch eines bereits installierten Deckenpanels ohne Befestigungseinheit gegen ein Deckenpanel mit Befestigungseinheit.

Ein derartiges Deckenpanel kann es ferner ermöglichen, dass verschiedene Verläufe der Vorhanganbringungseinheit keine Neukonstruktion der Anbindung der Befestigungseinheit erfordern.

Ein derartiges Deckenpanel ermöglicht es, dass die Vorhanganbringungseinheit innerhalb des Deckenpanels leicht verschiebbar ist, beispielsweise durch Feineinstellung zum Beispiel für Rekonfiguration (siehe obige Erläuterung von Rekonfiguration). Die Vorhanganbringungseinheit kann dabei beispielsweise verschwenkt am Deckenpanel befestigt sein.

Ein derartiges Deckenpanel ermöglicht es, dass beispielsweise bei einer Verschiebung der Vorhanganbringungseinheit um mehr als ein Deckenpanel das ganze Deckenpanel mit einem "Standarddeckenpanel" austauschbar ist, wodurch das Deckenpanel rekonfigurierbar ausgeführt ist.

Ein derartiges Deckenpanel ermöglicht es, dass beispielsweise Positionsfehler bei Einbau/Planung leicht behoben werden können und ein Ausschuss bzw. eine Neukonstruktion der Vorhanganbringungseinheit und der Befestigungseinheit nicht mehr erforderlich ist.

Ein derartiges Deckenpanel ermöglicht es, dass das Deckenpanel bzw. der Vorhang zwischen beispielsweise einem mittleren Überkopf-Staufach (Hatrack central) und einem seitlichen Überkopf-Staufach (Hatrack lateral) in einer Kabine ausgeführt werden kann, oder beispielsweise in einer Kabine ohne einen mittleren Überkopf-Staufach (Hatrack central) über einem seitlichen Überkopf-Staufach (Hatrack lateral) ausgeführt werden kann, oder beispielsweise in einer Kabine ohne mittlerem Überkopf-Staufach und ohne seitlichem Überkopf-Staufach über einem Flugzeugmonument ausgeführt werden kann, oder beispielsweise zwischen einem mittleren Überkopf-Staufach (Hatrack central) und einem seitlichem Monument einer Kabine ausgeführt werden kann, oder beispielsweise zwischen einem seitlichen Überkopf-Staufach (Hatrack lateral) und einem mittleren Monument ausgeführt werden kann, oder beispielsweise zwischen einem mittleren Monument (center) und einem seitlichen Monument (lateral) ausgeführt werden kann.

Ein derartiges Deckenpanel ermöglicht es, dass beispielsweise die Befestigungseinheit, die Halterungseinheit sowie die Vorhanganbringungseinheit für eine Wartung oder Reparatur (schnellen Wechsel, Quick Change) schnell abnehmbar bzw. austauschbar sind.

Ein derartiges Deckenpanel ermöglicht es, dass eine Befestigungseinheit bzw. eine Halterungseinheit, beispielsweise bei einer gewünschten veränderter Positionierung des Vorhangs, nicht angepasst werden müssen, sondern lediglich beispielsweise die Vorhanganbringungseinheit zum Halten des Vorhangs angepasst werden muss.

Ein derartiges Deckenpanel ermöglicht es, dass das Deckenpanel als Standarddeckenpanel ausführbar ist und somit bei der Installation des Deckenpanels ein geringer Zeit- und Kostenaufwand beispielsweise im Serienprozess anfällt.

Gemäß einem weiteren Ausführungsbeispiel der Erfindung können zwei oder auch mehrere Halterungseinheiten vorgesehen sein, die an der oder den mehreren Befestigungseinheiten angebracht sind, die in das Deckenpanel integriert sind. Die Befestigungseinheiten sind beispielsweise parallel zueinander angeordnet.

Gemäß einem weiteren Ausführungsbeispiel der Erfindung ist die Befestigungseinheit als Schiene ausgeführt.

Gemäß einem weiteren Ausführungsbeispiel der Erfindung weist das Deckenpanel eine Dichtungseinheit auf, wobei die Dichtungseinheit zum Durchstoßen der Halterungseinheit ausgeführt ist, wobei die Dichtungseinheit zum Abdecken der Befestigungseinheit ausgeführt ist und wobei die Dichtung zum Integrieren in die Befestigungseinheit ausgeführt ist.

Ein derartiges Deckenpanel mit einer Dichtungseinheit ermöglicht es, dass die Befestigungseinheit, die als Längsschiene ausführbar ist, beispielsweise mit jeweils zwei Dichtungen, wie Bürstendichtungen, Silikondichtungen, etc., durch die die Halterungseinheiten durchstoßen, abgedeckt werden kann oder dass die Dichtungseinheiten komplett in die Befestigungseinheit integriert werden können, so dass nur die Öffnungen der beispielsweise als zwei Schienen ausgeführten Befestigungseinheiten in dem Deckenpanel sichtbar sind.

Gemäß einem weiteren Ausführungsbeispiel der Erfindung weist das Deckenpanel ein Stecksystem auf, wobei die Befestigungseinheit als Profil mit einer definierten Rasterung für das Stecksystem ausgeführt ist, wobei das Stecksystem zum Anbringen der Halterungseinheit an der Befestigungseinheit ausgeführt ist.

Ein derartiges Deckenpanel mit einem Stecksystem ermöglicht es, dass die Befestigungseinheit als Profil mit einer definierten Rasterung für die Stecksysteme ausführbar ist.

Gemäß einem weiteren Ausführungsbeispiel der Erfindung ist das Stecksystem als Schnapp-Klick-Stecksystem ("Snap-and-click" System), als Schraubenbefestigungssystem, wobei die Schraube zum Beispiel durch eine Viertelumdrehung arretiert werden kann, oder als Bolzen mit ausfahrbaren Stiften oder Kugeln ausgeführt.

Gemäß einem weiteren Ausführungsbeispiel der Erfindung ist das Stecksystem als ein Federsystem mit Einrastelementen ausgeführt, wobei die Vorhanganbringungseinheit über eine als Feder ausgeführte Halterungseinheit mit Hilfe von Stiften in Aussparungen der Befestigungseinheit, die beispielsweise als U-förmiger Träger an dem Deckenpanel befestigt ist, einrastbar ausgeführt.

Gemäß einem weiteren Ausführungsbeispiel der Erfindung ist das Deckenpanel zum Integrieren der Befestigungseinheit in einer Längsrichtung des Deckenpanels ausgeführt. Das bedeutet in anderen Worten, dass die Befestigungseinheit in einer Längsrichtung des Deckenpanels integriert werden kann.

Gemäß einem weiteren Ausführungsbeispiel der Erfindung ist die Halterungseinheit zum Anbringen der Vorhanganbringungseinheit in einer Querrichtung zu einer Längsrichtung des Deckenpanels ausgeführt. In anderen Worten kann die Vorhanganbringungseinheit beispielsweise quer zu einem Gang in einem Flugzeug an der Halterungseinheit bzw. den Halterungseinheiten angebracht sein.

Gemäß einem weiteren Ausführungsbeispiel der Erfindung ist die Befestigungseinheit zum verschiebbaren Anbringen der Halterungseinheit ausgeführt. Das bedeutet, dass die Vorhanganbringungseinheit sowie die Halterungseinheit beispielsweise in eine Längsrichtung des Deckenpanels verschoben werden können.

Gemäß einem weiteren Ausführungsbeispiel der Erfindung ist die Halterungseinheit zum Anbringen an einer bestimmten Position an der Befestigungseinheit im Deckenpanel klemmbar ausgeführt.

Gemäß einem weiteren Ausführungsbeispiel der Erfindung ist das Deckenpanel zur Anbringung einer Passagierkabine eines Flugzeugs zwischen zwei Überkopf-Staufächem ausgeführt.

Gemäß einem weiteren Ausführungsbeispiel der Erfindung ist ein Luftfahrzeug mit einem Gang und einem Deckenpanel nach einem der vorhergehenden Ausführungsbeispiele angegeben, wobei das Deckenpanel über dem Gang installiert ist.

In einem derartigen Luftfahrzeug mit einem Gang kann das Deckenpanel flexibel im Deckenbereich des Flugzeugs installiert werden und somit eine Trennung von verschiedenen Kabinenbereichen innerhalb des Luftfahrzeugs ermöglichen.

Gemäß einem weiteren Ausführungsbeispiel der Erfindung ist ein Verfahren zum Anbringen eines Vorhangs in einer Kabine eines Transportmittels angegeben, mit einem ersten Schritt zum Integrieren einer Befestigungseinheit in ein Deckenpanel, einem zweiten Schritt zum Anbringen einer Halterungseinheit an der Befestigungseinheit, einem dritten Schritt zum Anbringen der Vorhanganbringungseinheit an der Halterungseinheit sowie einem letzten Schritt zum Anbringen des Vorhangs an der Vorhanganbringungseinheit.

Gemäß einem weiteren Ausführungsbeispiel der Erfindung weist das Verfahren weiterhin das Abdecken der Befestigungseinheit durch eine Dichtungseinheit nach dem Integrieren der Befestigungseinheit in dem Deckenpanel auf sowie das Durchstoßen der Dichtungseinheit durch eine Halterungseinheit beim Anbringen der Halterungseinheit an der Befestigungseinheit.

Gemäß einem weiteren Ausführungsbeispiel ist die Verwendung eines Deckenpanels gemäß einem der vorhergehenden Ausführungsbeispiele in einem Luftfahrzeug angegeben.

Die einzelnen Merkmale der verschiedenen Ausführungsbeispiele können auch untereinander kombiniert werden, wodurch sich zum Teil auch vorteilhafte Wirkungen einstellen können, die über die Summe der Einzelwirkungen hinausgehen, selbst wenn diese nicht ausdrücklich beschrieben sind.

Es ist insbesondere zu beachten, dass die hier und im Folgenden im Hinblick auf das Deckenpanel beschriebenen Merkmale auch in dem Transportmittel und in dem Verfahren implementierbar sind und umgekehrt.

Diese und andere Aspekte der Erfindung werden durch die Bezugnahme auf die hiernach beschriebenen beispielhaften Ausführungsformen erläutert und verdeutlicht.

### KURZE BESCHREIBUNG DER ZEICHNUNGEN

Fig. 1 zeigt eine perspektivische Ansicht eines Teils einer Flugzeugkabine mit einer Vorhangschiene und einem Vorhang.
Fig. 2a zeigt eine perspektivische Ansicht einer Vorhangschiene, die an einem mittleren Überkopf-Staufach in einer Kabine eines Luftfahrzeugs angebracht ist.
Fig. 2b zeigt eine perspektivische Ansicht einer Vorhangschiene mit einem Vorhang in einer Flugzeugkabine, die an einem seitlichen Deckenbereich eines Flugzeugs angeordnet ist.
Fig. 2c zeigt eine perspektivische Ansicht einer Vorhangschiene, die zwischen einem mittleren Überkopf-Staufach und einem seitlichen Überkopf-Staufach in einer Flugzeugkabine angeordnet ist.
Fig. 2d zeigt eine Vorhangschiene, die an einem mittleren Überkopf-Staufach und einem seitlichen Überkopf-Staufach in einer Flugzeugkabine angebracht ist mit einem Vorhang.
Fig. 3 zeigt eine Ansicht von oben von mehreren Vorhangschienenverläufen zum Anbringen eines Vorhangs für ein Flugzeug.
Fig. 4a zeigt eine perspektivische Unteransicht eines Deckenpanels zum Anbringen eines Vorhangs in einer Kabine eines Transportmittels gemäß einem Ausführungsbeispiel der Erfindung.
Fig. 4b zeigt eine perspektivische Seitenansicht eines Teils des Deckenpanels der Fig. 4a in Vergrößerung gemäß einem Ausführungsbeispiel der Erfindung.
Fig. 5 zeigt eine perspektivische Seitenansicht von unten einer Kabine in einem Luftfahrzeug mit einem Deckenpanel zum Anbringen eines Vorhangs gemäß einem Ausführungsbeispiel der Erfindung.
Fig. 6a zeigt eine schematische Schnittansicht eines Deckenpanels zum Anbringen eines Vorhangs in einer Kabine eines Transportmittels gemäß einem Ausführungsbeispiel der Erfindung.
Fig. 6b zeigt eine Schnittansicht des Deckenpanels der Fig. 6a entlang der Schnittlinie A-A gemäß einem Ausführungsbeispiel der Erfindung.
Fig. 6c zeigt eine Schnittansicht eines Teils eines Deckenpanels zum Anbringen eines Vorhangs in einer Kabine eines Transportmittels gemäß einem Ausführungsbeispiel der Erfindung.
Fig. 7 zeigt ein Luftfahrzeug mit zwei Gängen und mehreren Deckenpanelen zum Anbringen eines Vorhangs in einer Kabine des Luftfahrzeugs gemäß einem Ausführungsbeispiel der Erfindung.
Fig. 8 zeigt ein Verfahren zum Anbringen eines Vorhangs in einer Kabine eines Transportmittels gemäß einem Ausführungsbeispiel der Erfindung.

### DETAILLIERTE BESCHREIBUNG BEISPIELHAFTER AUSFÜHRUNGSBEISPIELE

Im Folgenden werden unter Bezugnahme auf die beigefügten Zeichnungen Ausführungsbeispiele der Erfindung beschrieben.

Die Darstellungen in den Figuren sind schematisch und nicht maßstäblich. In der folgenden Figurenbeschreibung werden für gleiche oder ähnliche Elemente die gleichen Bezugszeichen verwenden.

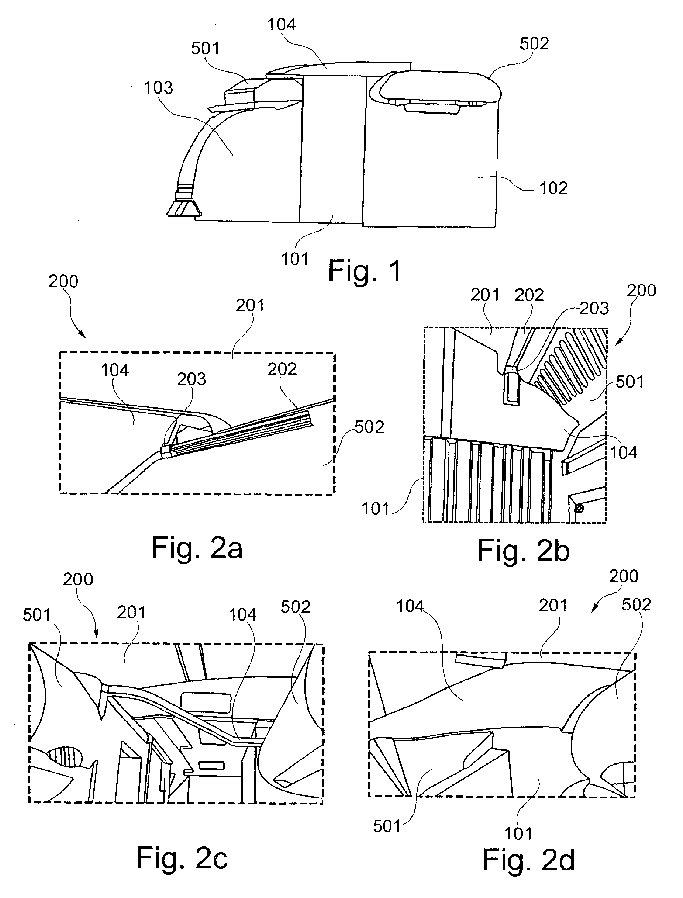

Fig. 1 zeigt eine perspektivische Ansicht eines Teils einer Flugzeugkabine mit einem mittleren Überkopf-Staufach 502 und einem seitlichen Überkopf-Staufach 501, an denen eine Vorhangschiene 104 angebracht ist, wobei an der Vorhangschiene 104 ein Vorhang 101 angebracht ist, der zum Trennen einzelner Bereiche beispielsweise einer Flugzeugkabine ausgeführt ist. Unterhalb des mittleren Überkopf-Staufachs befindet sich ein mittleres Abteil, unterhalb des seitlichen Überkopf-Staufachs befindet sich ein seitliches Abteil.

Fig. 2a zeigt eine perspektivische Ansicht eines Teils einer Kabine 200 eines Flugzeugs mit einem Deckenbereich 201, an dem eine Vorhangschiene 101 angeordnet ist, die über eine Halterungseinheit 203 an einer Befestigungseinheit 202 angebracht ist, wobei die Befestigungseinheit 202 in einem seitlichen Überkopf-Staufach 501 angebracht ist.

Fig. 2b zeigt eine perspektivische Ansicht eines Teils einer Kabine 200 eines Luftfahrzeugs mit einer Vorhangschiene 104 zum Aufhängen eines Vorhangs 101. Die Vorhangschiene 104 ist über eine Halterungseinheit 203 an einer Befestigungseinheit 202 befestigt, wobei die Befestigungseinheit 202 in einem Deckenbereich 201 des Luftfahrzeugs integriert ausgeführt ist.

Fig. 2c zeigt eine perspektivische Ansicht von unten von einem Gang von einer Kabine 200 eines Flugzeugs mit einem Deckenbereich 201 sowie einem mittleren Überkopf-Staufach 502 und einem seitlichen Überkopf-Staufach 501. Eine Vorhangschiene 104 zum Aufhängen eines Vorhangs ist dabei zweifach gebogen und verschwenkt an dem mittleren Überkopf-Staufach 502 und an dem seitlichen Überkopf-Staufach 501 angebracht.

Fig. 2d zeigt eine schematische Darstellung eines Abschnitts einer Kabine 200 eines Flugzeugs mit einem Deckenbereich 201 sowie einem mittleren Überkopf-Staufach 502 und einem seitlichen Überkopf-Staufach 501, wobei eine Vorhangschiene 104 an dem mittleren Überkopf-Staufach 502 sowie an dem seitlichen Überkopf-Staufach 501 und an dem Deckenbereich 201 angebracht ist. An der Vorhangschiene 104 ist ein Vorhang 101 zum Abtrennen von Bereichen in der Flugzeugkabine angebracht.

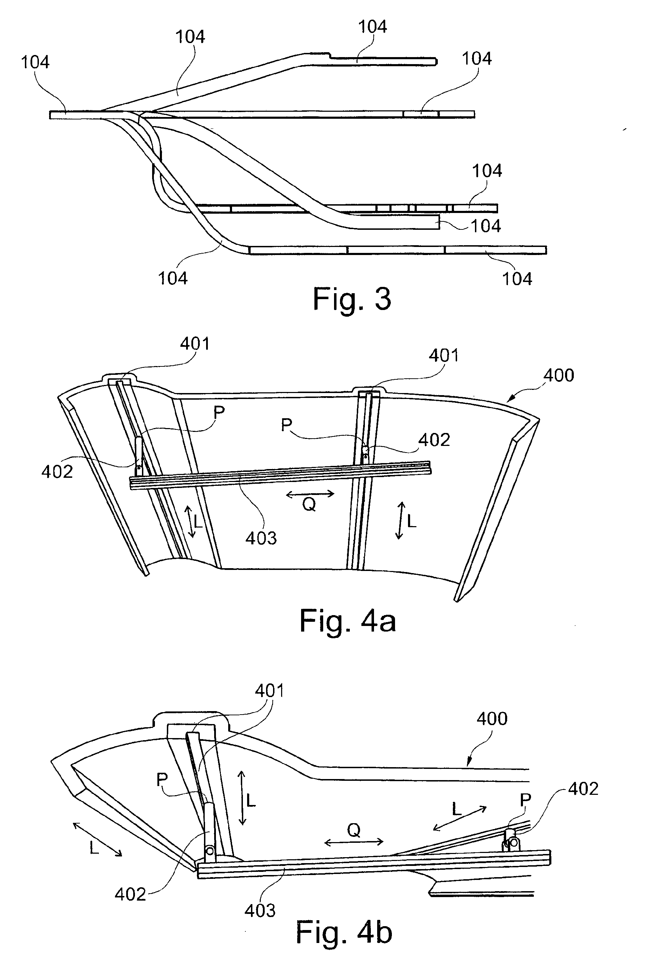

Fig. 3 zeigt verschiedene Verläufe von unterschiedlichen Vorhangschienen 104 für Flugzeugkabinen zum Aufhängen von Vorhängen 101 um Bereiche in Flugzeugkabinen voneinander zu trennen.

Fig. 4a zeigt ein Deckenpanel 400 zum Anbringen eines Vorhangs 101 in einer Kabine eines Transportmittels mit zwei Befestigungseinheiten 401, die in dem Deckenpanel 400 integriert ausgeführt sind, zwei Halterungseinheiten 402, die an den Befestigungseinheiten 401 angebracht sind und einer Vorhanganbringungseinheit 403 zum Halten eines Vorhangs, wobei die Vorhanganbringungseinheit 403 an den beiden Halterungseinheiten 402 angebracht sind. Dabei sind die Befestigungseinheiten 401 als Schienen 401 ausgeführt, die in einer Längsrichtung L zu dem Deckenpanel 400 in dem Deckenpanel 400 integriert sind und parallel zueinander angeordnet sind. Die Halterungseinheiten 402 sind an einer bestimmten Position P in jeweils einer Schiene 401 eingeklemmt und ermöglichen so eine Arretierung der Vorhanganbringungseinheit 403.

Die Vorhanganbringungseinheit 403 verläuft in einer Querrichtung Q zur Längsrichtung L des Deckenpanels.

Fig. 4b zeigt einen Teil des Deckenpanels 400 der Fig. 4a in einer vergrößerten Ansicht.

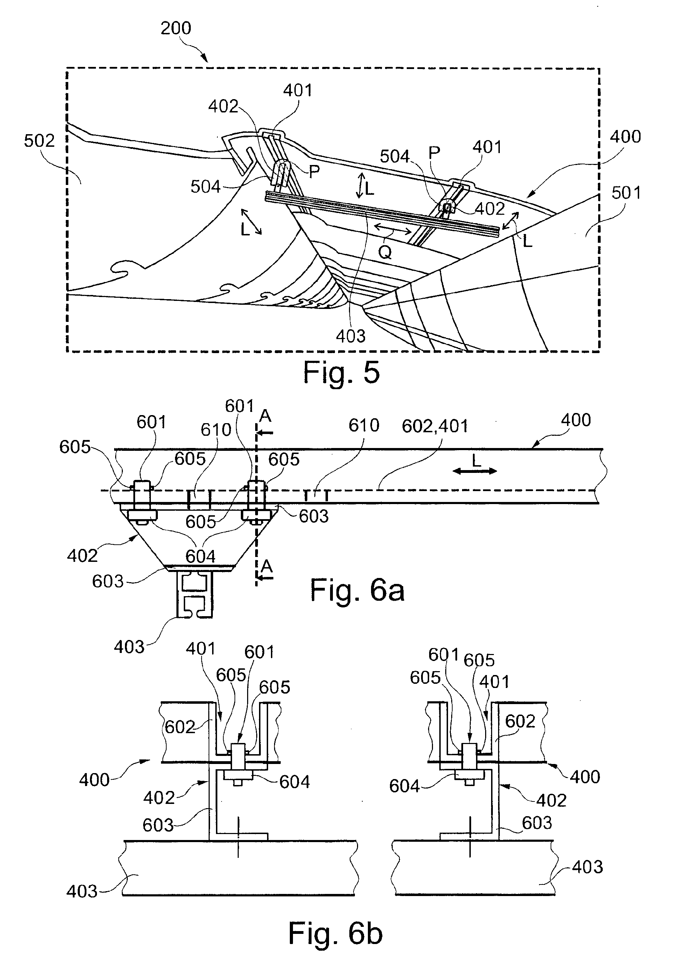

Fig. 5 zeigt eine Kabine 200 eines Flugzeugs in einer perspektivischen Ansicht von unten mit einem seitlichen Überkopf-Staufach 501 und einem mittleren Überkopf-Staufach 502. Ein Deckenpanel 400 ist zwischen dem seitlichen Überkopf-Staufach 501 und dem mittleren Überkopf-Staufach 502 angeordnet und weist in einer Längsrichtung L zwei integrierte Befestigungseinheiten 401 auf, die als Schienen 401 ausgeführt sind. An die beiden Schienen 401 sind zwei Halterungseinheiten 402 angebracht, an die eine Vorhanganbringungseinheit 403 angebracht ist, wobei die Vorhanganbringungseinheit 403 zum Halten eines Vorhangs zum Abtrennen von Bereichen der Kabine 200 des Flugzeugs ausgeführt ist.

Fig. 5 zeigt ferner zwei Dichtungseinheiten 504, die zum Abdecken der Befestigungseinheiten 401 ausgeführt sind, und in die Befestigungseinheiten 401 integriert sein können, wobei die Dichtungseinheiten 504 von den beiden Halterungseinheiten 402 durchstoßen werden.

Die beiden Schienen 401 verlaufen dabei in einer Längsrichtung L des Deckenpanels 400, während die Vorhanganbringungseinheit 403 in einer Querrichtung Q zur Längsrichtung L des Deckenpanels 400 verläuft.

Fig. 6a zeigt ein Deckenpanel 400 mit einem U-Träger (Träger mit einem U-Profil) 602, der als Befestigungseinheit 401 in das Deckenpanel 400 integriert ausgeführt ist, und mit einem Stecksystem 601, das Bolzen 604 mit Arretierstiften 605 aufweist.

Die Bolzen 604 sind zum Anbringen einer Halterungseinheit 402 durch Aussparungen 610 des U-Trägers 602 ausgeführt. Die Halterungseinheit 402 ist als U-Profil 603 ausgeführt und ist mit einer Vorhanganbringungseinheit 403 befestigt, die zum Halten eines Vorhangs ausgeführt ist.

Die Aussparungen 610 der Befestigungseinheit 402 bzw. des U-Trägers 602 für das Stecksystem 601 verlaufen in einer Längsrichtung L des Deckenpanels 400.

Fig. 6b zeigt eine Schnittansicht des Deckenpanels der Fig. 6a entlang der Schnittlinie A-A und weist alle Elemente des Deckenpanels 400 der Fig. 6a auf.

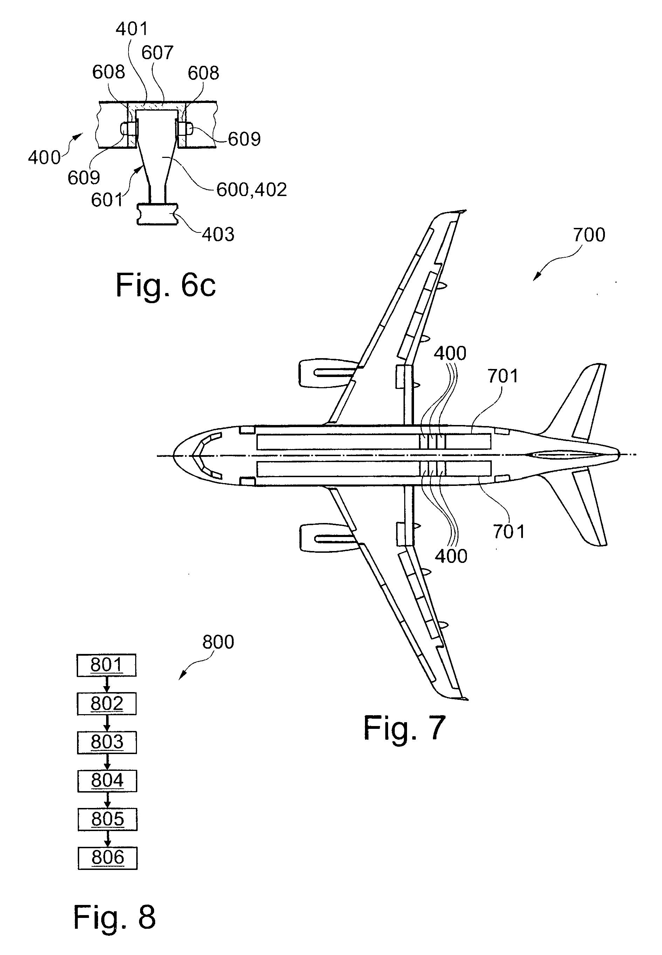

Fig. 6c zeigt einen Teil eines Deckenpanels 400 zum Anbringen eines Vorhangs in einer Kabine eines Transportmittels, wobei eine Befestigungseinheit 401 als U-Träger 607 ausgeführt ist, der in das Deckenpanel 400 integriert ist.

An das Deckenpanel 400 ist eine als Feder 606 ausgeführte Halterungseinheit 402 angebracht, die zusammen mit zwei Arretierungsstiften 609 ein Stecksystem 601 bildet. Die Halterungseinheit 402 ist durch die Arretierungsstifte 609, die in Aussparungen 608 des U-Trägers 607 einrasten, an der Befestigungseinheit 401 angebracht. An dem Stecksystem 601 bzw. der Halterungseinheit 402 ist eine Vorhanganbringungseinheit 403 angebracht.

Fig. 7 zeigt ein Luftfahrzeug 700 mit zwei Gängen 701 und mehreren Deckenpanelen 400, wobei die Deckenpanele 400 über dem Gang 700 installiert sind.

Fig. 8 zeigt ein Verfahren 800 zum Anbringen eines Vorhangs in einer Kabine eines Transportmittels mit folgenden Schritten: In Schritt 801 erfolgt ein Integrieren einer Befestigungseinheit in ein Deckenpanel. In Schritt 802 erfolgt ein Anbringen einer Halterungseinheit an der Befestigungseinheit. In Schritt 803 erfolgt ein Anbringen der Vorhanganbringungseinheit an der Halterungseinheit. In Schritt 804 erfolgt ein Anbringen des Vorhangs an der Vorhanganbringungseinheit. In Schritt 805 erfolgt ein Abdecken der Befestigungseinheit durch eine Dichtungseinheit nach dem Integrieren der Befestigungseinheit in dem Deckenpanel. Im letzten Schritt 806 erfolgt ein Durchstoßen der Dichtungseinheit durch eine Halterungseinheit beim Anbringen der Halterungseinheit an eine Befestigungseinheit.

Obwohl die Erfindung unter Bezugnahme auf die Ausführungsbeispiele beschrieben wurde, können verschiedene Änderungen und Modifikationen vorgenommen werden, ohne den Schutzbereich der Erfindung zu verlassen. Das Transportmittel mit einem Gang und einem Deckenpanel kann als Landfahrzeug, als Luftfahrzeug, wie ein Flugzeug oder Helikopter, sowie als Wasser- und Schienenfahrzeug ausgeführt sein.

Ergänzend ist darauf hinzuweisen, dass "umfassend" oder "aufweisend" keine anderen Elemente oder Schritte ausschließt und "eine" oder "ein" keine Vielzahl ausschließt. Insbesondere kann das Deckenpanel beispielsweise also mehr als eine Befestigungseinheit, mehr als eine Halterungseinheit, mehr als eine Vorhanganbringungseinheit, mehr als einen Vorhang, mehr als eine Dichtungseinheit, mehr als ein Stecksystem, und das Luftfahrzeug mehr als einen Gang und mehr als ein Deckenpanel aufweisen.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Passagierkabine eines Transportmittels, umfassend ein Deckenpanel (400) mit einer Vorrichtung zum Anbringen eines Vorhangs (101) in der Passagierkabine (200) des Transportmittels (700), das Deckenpanel (400) aufweisend:
zwei parallel zueinander angeordnete Befestigungseinheiten (401);
zwei Halterungseinheiten (402);
eine Vorhanganbringungseinheit (403);
wobei das Deckenpanel (400) zum Halten der Befestigungseinheit (401) ausgeführt ist;
wobei die zwei Halterungseinheiten (402) an den Befestigungseinheiten (401) angebracht sind;
wobei die Vorhanganbringungseinheit (403) an den Halterungseinheiten (402) angebracht ist;
wobei die Vorhanganbringungseinheit (403) zum Halten eines Vorhangs (101) ausgeführt ist;
wobei die Befestigungseinheiten (401) in das Deckenpanel (400) in einer Längsrichtung (L) des Deckenpanels (400) integriert sind; und
wobei das Deckenpanel (400) in der Passagierkabine des Transportmittels zwischen zwei Überkopf-Staufächem (501, 502) angebracht ist.

2. Passagierkabine nach Anspruch 1,
wobei die Befestigungseinheit (401) als eine Schiene (401) ausgeführt ist.

3. Passagierkabine nach Anspruch 1 oder 2, weiterhin aufweisend:
eine Dichtungseinheit (504);
wobei die Dichtungseinheit (504) von der Halterungseinheit (402) durchstoßen wird;
wobei die Dichtungseinheit (504) zum Abdecken der Befestigungseinheit (401) ausgeführt ist;
wobei die Dichtungseinheit (504) zum Integrieren in die Befestigungseinheit (401) ausgeführt ist.

4. Passagierkabine nach Anspruch 1 oder 3, weiterhin aufweisend:
ein Stecksystem (601);
wobei die Befestigungseinheit (401) als Profil mit einer definierten Rasterung für das Stecksystem (601) ausgeführt ist;
wobei das Stecksystem (601) zum Anbringen der Halterungseinheit (402) an der Befestigungseinheit (401) ausgeführt ist.

5. Passagierkabine nach einem der vorhergehenden Ansprüche,
wobei die Halterungseinheit (402) zum Anbringen der Vorhanganbringungseinheit (403) in einer Querrichtung (Q) zu einer Längsrichtung (L) des Deckenpanels (400) ausgeführt ist.

6. Passagierkabine nach einem der vorhergehenden Ansprüche,
wobei die Befestigungseinheit (401) zum verschiebbaren Anbringen der Halterungseinheit (402) ausgeführt ist.

7. Passagierkabine nach einem der vorhergehenden Ansprüche,
wobei die Halterungseinheit (402) zum Anbringen an einer bestimmten Position (P) an der Befestigungseinheit (401) klemmbar ausgeführt ist.

8. Luftfahrzeug (700) mit einem Gang (701) und einer Passagierkabine nach einem der Ansprüche 1 bis 7, wobei das Deckenpanel (400) über dem Gang (700) installiert ist.

9. Verfahren (800) zum Anbringen eines Vorhangs (101) in einer Kabine (200) eines Transportmittels (700), das Verfahren aufweisend die Schritte:
Integrieren zweier parallel zueinander angeordneter Befestigungseinheiten (401) in einem Deckenpanel (400, 801) in einer Längsrichtung (L) des Deckenpanels (400);
Anbringen zweier Halterungseinheiten (402) an der Befestigungseinheit (401, 802);
Anbringen der Vorhanganbringungseinheit (403) an den Halterungseinheiten (402, 803);
Anbringen des Vorhangs (101) an der Vorhanganbringungseinheit (403, 804);
Anbringen des Deckenpanels in der Kabine des Transportmittels zwischen zwei Überkopf-Staufächern (501, 502).

10. Verfahren nach Anspruch 9, weiterhin aufweisend die Schritte:
Abdecken einer Befestigungseinheit (401) durch eine Dichtungseinheit (504) nach dem Integrieren der Befestigungseinheit (401) in dem Deckenpanel (400, 805);
Durchstoßen der Dichtungseinheit (504) durch eine Halterungseinheit (402) beim Anbringen der Halterungseinheit (402) an der Befestigungseinheit (401, 806).

11. Verwendung einer Passagierkabine nach einem der Ansprüche 1 bis 7 in einem Luftfahrzeug (700).

## Claims

1. Passenger cabin of a means of transport, comprising a ceiling panel (400) with a device for attaching a curtain (101) in the passenger cabin (200) of the means of transport (700), the ceiling panel (400) comprising:
two attachment units (401) that are arranged parallel to each other;
two supporting units (402);
a curtain attachment unit (403);
wherein the ceiling panel (400) is adapted to support the attachment unit (401);
wherein the two supporting units (402) are mounted to the attachment units (401);
wherein the curtain attachment unit (403) is mounted to the supporting units (402);
wherein the curtain attachment unit (403) is adapted to support a curtain (100);
wherein the attachment units (401) are integrated in the ceiling panel (400) in a longitudinal direction (L) of the ceiling panel (400); and
wherein the ceiling panel (400) is mounted in the passenger cabin of the means of transport between two overhead stowage bins (501, 502).

2. Passenger cabin according to claim 1,
wherein the attachment unit (401) is designed as a rail (401).

3. Passenger cabin according to claim 1 or 2, further comprising:
a sealing unit (504);
wherein the sealing unit (504) is punched through by the supporting unit (402);
wherein the sealing unit (504) is designed to cover the attachment unit (401);
wherein the sealing unit (504) is designed integrate in the attachment unit (401).

4. Passenger cabin according to claim 1 or 3, further comprising;
a plug-in system (601);
wherein the attachment unit (401) is designed as a profile with a defined raster for the plug-in system (601);
wherein the plug-in system (601) is adapted to mount the supporting unit (402) to the fastening unit (401).

5. Passenger cabin according to one of the preceding claims,
wherein the supporting unit (402) is adapted to mount the curtain attachment unit (403) in a transverse direction (Q) to a longitudinal direction (L) of the ceiling panel (400).

6. Passenger cabin according to one of the preceding claims,
wherein the attachment unit (401) is adapted to movably mount the supporting unit (402).

7. Passenger cabin according to one of the preceding claims,
wherein the supporting unit (402) is designed to be clampable in order to be mounted to a designated position (P) to the attachment unit (401).

8. Aircraft (700) with an aisle (701) and a passenger cabin according to one of claims 1 to 7, wherein the ceiling panel (400) is installed over the aisle (700).

9. Method (800) to attach a curtain (101) in a cabin (200) of a means of transport (700), the method comprising the steps:
integrating two attachment units (401) that are arranged parallel to each other in a ceiling panel (400, 801) in a longitudinal direction (L) of the ceiling panel (400);
mounting two supporting units (402) to the attachment unit (401, 802);
mounting the curtain attachment unit (403) to the supporting units (402, 803);
mounting the curtain (101) to the curtain attachment unit (403, 804);
mounting the ceiling panel in the cabin of the means of transport between two overhead stowage bins (501, 502).

10. Method according to claim 9, further comprising the steps:
covering of an attachment unit (401) with a sealing unit (504) after integrating the attachment unit (401) in the ceiling panel (400, 805);
punching the sealing unit (504) through a supporting unit (402) while attaching the supporting unit (402) to the attachment unit (401, 806).

11. Use of a passenger cabin according to one of claims 1 to 7 in an aircraft (700).

## Revendications

1. Cabine de passagers d'un moyen de transport, comprenant un panneau de plafond (400) avec un dispositif d'installation d'un rideau (101) dans la cabine de passagers (200) du moyen de transport (700), le panneau de plafond (400) présentant :
- deux unités de fixation (401) disposées parallèlement entre elles ;
- deux unités de retenue (402) ;
- une unité d'attachement du rideau (403) ;
le panneau de plafond (400) étant agencé pour retenir l'unité de fixation (401) ;
les deux unités de retenue (402) étant installées aux unités de fixation (401) ;
l'unité d'attachement du rideau (403) étant installée aux unités de retenue (402) ;
l'unité de d'attachement du rideau (403) étant agencée pour retenir un rideau (101) ;
les unités de fixation (401) étant intégrées dans le panneau de plafond (400) dans une direction longitudinale (L) du panneau de plafond (400); et
le panneau de plafond (400) étant installé dans la cabine de passagers du moyen de transport entre deux compartiments de rangement en hauteur (501, 502).

2. Cabine de passagers selon la revendication 1, l'unité de fixation (401) étant agencée sous la forme d'un rail (401).

3. Cabine de passagers selon la revendication 1 ou 2, présentant en outre :
- une unité d'étanchéité (504) ;
l'unité d'étanchéité (504) étant percée par l'unité de retenue (402) ;
l'unité de d'étanchéité (504) étant agencée pour recouvrir l'unité de fixation (401) ;
l'unité de d'étanchéité (504) étant agencée pour s'intégrer dans l'unité de fixation (401).

4. Cabine de passagers selon la revendication 1 ou 3, présentant en outre :
- un système enfichable (601) ;
l'unité de fixation (401) étant agencée sous forme de profilé avec une crémaillère définie pour le système enfichable (601) ;
le système enfichable (601) étant agencé pour installer l'unité de retenue (402) à l'unité de fixation (401).

5. Cabine de passagers selon l'une des revendications précédentes,
l'unité de retenue (402) pour l'installation de l'unité d'attachement du rideau (403) étant agencée dans une direction perpendiculaire (Q) à une direction longitudinale (L) du panneau de plafond (400).

6. Cabine de passagers selon l'une des revendications précédentes,
l'unité de fixation (401) étant agencée pour l'installation coulissante de l'unité de retenue (402).

7. Cabine de passagers selon l'une des revendications précédentes,
l'unité de retenue (402) étant agencée emboîtable pour l'installation à une position déterminée (P) sur l'unité de fixation (401).

8. Aéronef (700) avec un couloir (701) et une cabine de passagers selon l'une des revendications 1 à 7,
le panneau de plafond (400) étant installé au-dessus du couloir (700).

9. Procédé (800) d'installation d'un rideau (101) dans une cabine (200) d'un moyen de transport (700), le procédé comprenant les étapes de :
- intégration de deux unités de fixation (401) disposées parallèles entre elles dans un panneau de plafond (400, 801) dans une direction longitudinale (L) du panneau de plafond (400) ;
- installation de deux unités de retenue (402) à l'unité de fixation (401, 802) ;
- installation de l'unité d'attachement du rideau (403) aux unités de retenue (402, 803) ;
- installation du rideau (101) à l'unité d'attachement du rideau (403, 804) ;
- installation du panneau de plafond dans la cabine du moyen de transport entre deux compartiments de rangement en hauteur(501, 502).

10. Procédé selon la revendication 9, présentant en outre les étapes de :
- recouvrement d'une unité de fixation (401) par une unité d'étanchéité (504) après l'intégration de l'unité de fixation (401) dans le panneau de plafond (400, 805) ;
- perçage de l'unité d'étanchéité (504) par une unité de retenue (402) lors de l'installation de l'unité de retenue (402) sur l'unité de fixation (401, 806).

11. Utilisation d'une cabine de passagers selon l'une des revendications 1 à 7 dans un aéronef (700).
